Europäisches Patentamt

European Patent Office

Office européen des brevets

(11) Publication number: **0 315 910**
**A2**

# EUROPEAN PATENT APPLICATION

(21) Application number: **88118398.2**

(22) Date of filing: **04.11.88**

(51) Int. Cl.⁴: **H05K 5/06** , **G06F 1/00** ,
**H01H 13/70**

(30) Priority: **09.11.87 US 118843**

(43) Date of publication of application:
**17.05.89 Bulletin 89/20**

(84) Designated Contracting States:
**DE FR GB NL**

(71) Applicant: **TEKTRONIX, INC.**
**Howard Vollum Park 14150 S.W. Karl Braun**
**Drive P.O. Box 500**
**Beaverton Oregon 97077(US)**

(72) Inventor: **Leith, Robert Harold,**
**1444 S. E. Brookwood,**
**Hillsboro, Oregon 97123,(US)**
Inventor: **Miller, Meryl E.,**
**27118, Mesaba Drive,**
**Rancho Palos Verdes, California 90274,(US)**
Inventor: **Nopper, LeRoy N.,**
**6, Lakeview Drive,**
**Irvine, California 92714,(US)**
Inventor: **Lichte, James,**
**1519, Ransom Road,**
**Riverside, California 92506,(US)**
Inventor: **Jones, Terrence Keith,**
**8150 S. W. 41st Avenue,**
**Portland, Oregon 97219,(US)**

(74) Representative: **Liesegang, Roland, Dr.-Ing.**
**FORRESTER & BOEHMERT**
**Widenmayerstrasse 4**
**D-8000 München 22(DE)**

(54) **Sealed computer terminal keyboard.**

(57) A computer terminal keyboard (11) is sealed by a molded elastomeric top cover (14), shaped to conform to the housing and keys (34) of the keyboard, and a bottom cover (16) shaped to enclose the base of and secure the top cover around its periphery to the keyboard housing. The top cover (14) is shaped to provide a substantially planar surface on the top plate with elevated individual key covers (74) integrally formed in the top cover. Portions of the top cover extending over the top face and sides of the keyboard housing are formed in a first thickness sufficient to provide a durable covering. Portions of the top cover (14) immediately adjacent and between the individual key covers (74) and the sides of the key covers, are formed in a reduced second thickness to allow for flexure as the keys are depressed. The top surface of the top cover (14) is planar so that spilled liquid and debris are easily wiped or brushed away from around and between the key covers. The bottom cover (16) is formed of a rigid material and has edges shaped to mate snugly against wraparound flanges (56) on the periphery of the top cover. The bottom cover (16) is secured by screws (60) in existing screw holes (62) in the underside of the keyboard housing.

FIG. 1

## SEALED COMPUTER TERMINAL KEYBOARD

### BACKGROUND OF THE INVENTION

This invention relates generally to environmentally protected computer peripherals and more particularly to a sealed computer terminal keyboard for use in manufacturing environments.

In the past, computers and peripherals have been restricted to use in carefully controlled environments. As the use of computers has been extended into manufacturing environments, a need has arisen for computer peripherals that can be used reliably and safely in shops and assembly areas. There, the peripherals are exposed to dripping liquids, spills, dirt, machine shavings, sawdust, and other debris.

Conventional computer terminal keyboards have a housing with many discrete, closely-spaced alpha-numeric keys protruding upward through openings in the top of the keyboard. In a manufacturing environment, spills and dirt can easily enter the keyboard and soon disable it. Keyboards are known with internally sealed electronics to provide protection against liquid spills, but debris can still enter spaces within the keys and foul their operation. The keyboards are also difficult to clean and cleaning usually requires disassembling the keyboard.

Panel assemblies are available from Duralith Corp., 525 Orange Street, Millville, New Jersey, with ELASTIKEY* molded silicone rubber actuators and key arrays. A 16-key numeric key pad, marketed under the trademark TACTON* by Bebie & Co., Ebmatingen, Switzerland, has a resilient molded rubber keypad cover with integrally formed actuators depending internally from the underside of each key. Neither of these designs is suitable for sealing a conventional computer terminal keyboard of a type typically having arrays of 88, 101, or similar numbers of full-travel keys arranged on the front of a stand-alone, elongate keyboard housing.

A need remains for a computer terminal keyboard that is suitably protected against spills and debris for use in a shop, assembly or other manufacturing environment.

### SUMMARY OF THE INVENTION

One object of the invention is to provide a computer terminal keyboard unit that is sealed against both spilled liquid and particulate debris.

Another object of the invention is to seal a computer terminal keyboard while maintaining a full-travel keystroke.

A further object of the invention is to provide a sealed computer terminal keyboard having a feel to the user that is similar to the feel of a standard terminal keyboard.

An additional object of the invention is to seal a computer terminal keyboard in an economical manner, with a minimum of added assembly and structural modification, so that conventional keyboards can be readily retrofitted for use in a manufacturing environment.

A sealed computer terminal keyboard in accordance with the invention can be made starting with a conventional keyboard. Such a keyboard has a base and a top plate which are fitted together to form a housing. The top plate has a generally planar top face and the base plate is designed to rest on a flat surface and support the top face at an incline relative to the surface. The top and base plates have front, rear and side faces which form upper corners with the top face and bottom corners with the underside of the keyboard. Full-travel keys are mounted in a keyboard assembly within the keyboard housing and have closely spaced key caps protruding upward through openings in the top plate a predetermined distance above the top face. A conventional keyboard also has an attached cable in the back and can include a connector for a mouse or other control device.

The keyboard is sealed by a top cover composed of a resilient, waterproof material shaped to conform to the top plate and keys, and a bottom cover shaped to enclose the base of the keyboard and secure the top cover around its periphery to the keyboard. The top cover is shaped to provide a substantially planar surface on the top plate with elevated individual key covers integrally formed in the top cover. The bulk of the top cover, those portions extending over the top face of the top plate and the sides of the keyboard housing, are formed in a first thickness sufficient to provide a durable covering. For convenience, these portions are called the field area of the cover. Portions of the top cover immediately adjacent and between the key covers, and the sides of the key covers, are formed in a reduced, second thickness to allow for flexure as the keys are depressed. The top surface of the portions of the top cover surrounding and between the key covers is coplanar with the top surface of the field area so that spilled liquid and debris are easily wiped or brushed away. The undersurface of the top cover around and between the keys is relieved relative to the undersurface of the field area to provide the reduced, second thickness. The bottom cover is formed of a rigid material, such as metal or molded plastic, and has edges shaped to mate snugly against undercut, wraparound flanges on the periphery of the top cover. The bottom cover is suitably secured, preferably by screws in existing screw holes in the underside of the keyboard housing.

The foregoing and other objects, features and advantages of the invention will become more readily apparent from the following detailed description which proceeds with reference to the accompanying drawings.

BRIEF DESCRIPTION OF THE DRAWINGS

FIG. 1 is an exploded, diagrammatic, bottom rear perspective view of a sealed computer terminal keyboard in accordance with the invention.

FIG. 2 is a cross-sectional view of the assembled and upright sealed keyboard taken along lines 2-2 in FIG. 1.

FIG. 3 is a bottom plan view of the elastic top cover of the keyboard of FIGS. 1 and 2, to scale and with dimensions as manufactured for one model of keyboard.

FIG. 4 is a rear elevation view of the cover of FIG. 3.

FIG. 5 is an end elevation view of the cover of FIGS 3 and 4, the opposite end being substantially a mirror image.

FIGS. 6A-6G are various partial sectional views taken along section lines A-A through G-G in FIGS 3 and 5.

FIG. 7 is a rear elevational view of the keyboard bottom cover of FIGS 1 and 2, to scale and with dimensions as manufactured for use in combination with the top cover of FIG. 3.

FIG. 8 is an interior plan view of the bottom cover of FIG. 7.

FIGS 9A and 9B are opposite side elevational views of the bottom cover of FIGS 7 and 8.

FIGS 10A, 10B, and 10C are partial cross-sectional views taken along section lines A-A, B-B and C-C in FIGS 8, 7 and 9B, respectively.

DETAILED DESCRIPTION

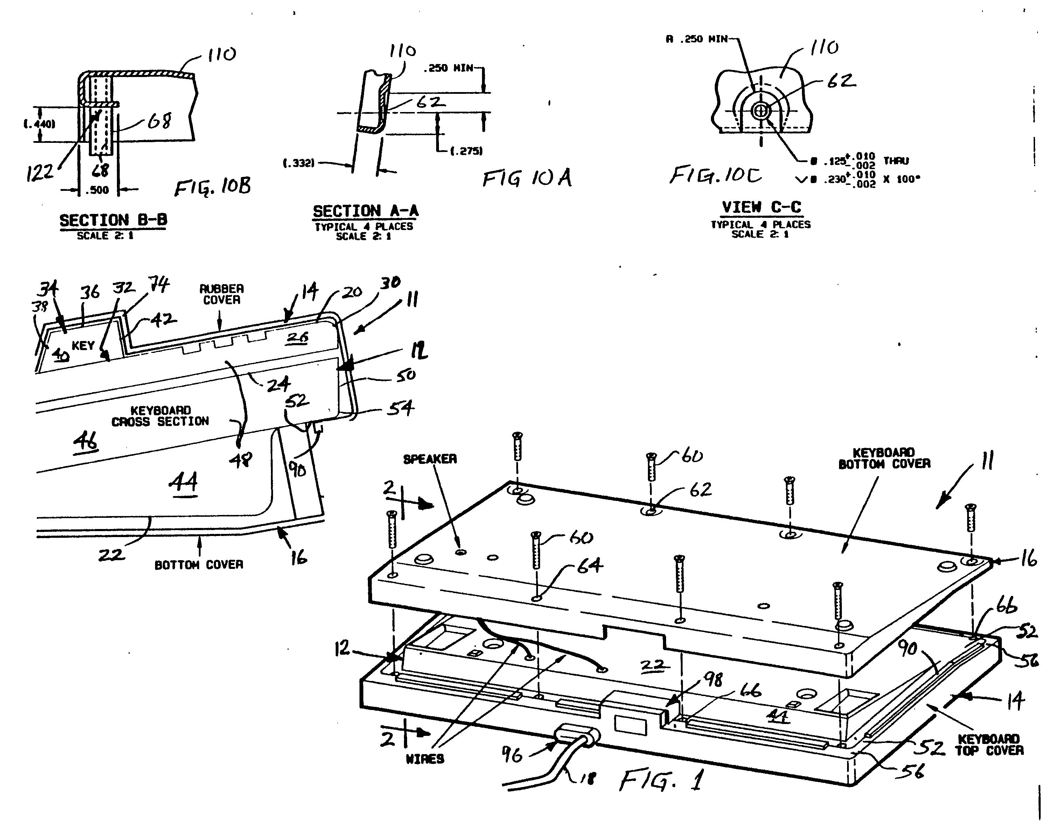

Referring to FIGS 1 and 2, a sealed keyboard 11 in accordance with the invention is formed by enclosing a conventional, stand alone computer terminal keyboard 12 within a keyboard top cover 14 and a keyboard bottom cover 16. The keyboard 11 includes a cable 18 and a housing, typically formed of molded plastic top and bottom plates 20, 22, mated together along a dividing line 24, enclosing conventional mechanical and electrical keyboard components (not shown) typically arranged on a printed circuit board.

The top plate 20 has a rectangular, generally planar top face and short front, right and left side and rear faces (only left side face 26 and rear face 28 are shown) forming rounded upper corners 30 with the top face. Rectilinear openings 32 are formed in the top face of the top plate for key caps such as key 34 to protrude upward through the top plate from underlying mechanical and electrical components housed inside the keyboard.

Conventionally, the keys are formed of molded plastic with a slightly cylindrically-concave top 36 face, inclined front and side faces 38, 40 to give the key a trapezoidal front elevational profile, wider at the bottom and narrower at the top, and a back face 42 that is approximately normal to the top face. The keys protrude above the elevation of the top face of the top plate 20 a distance equal to or slightly exceeding the length of travel of a full-travel key switch when depressed. The length of travel of a key switch in a full-travel keyboard is typically 0.15 to 0.165 inches. Single-width keys are sized so that their top face is nearly square; double-width keys range from about 1-1/3 times to two times the width of a single-width key, and a space bar is, for example, the width of eight single-width keys.

The bottom plate 22 is generally formed in such a way that the keyboard top face is slanted upward from front to rear. The bottom plate has an angular bottom portion 44, which provides the incline of the top face, and an overhanging upper portion 46 having front, side and rear faces (only left side and rear faces 48, 50 shown) adapted to mate along their edges with complementary edges of the corresponding faces of the top plate 20. The lower portion 44 is sized somewhat smaller than the upper portion. It is connected to the upper portion by an overhanging wall portion 52 that extends around the sides and rear of the keyboard and forms a rounded lower corner 54 along the front, side and rear faces of the bottom plate.

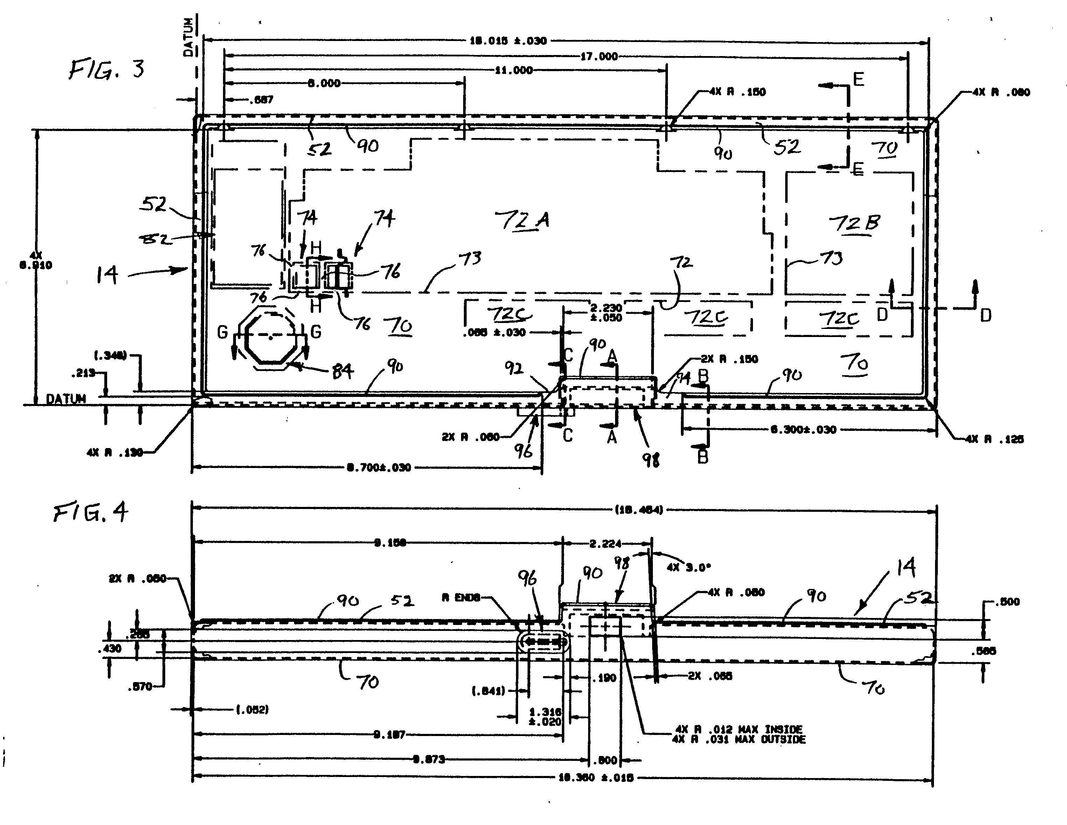

The top cover 14 of sealed keyboard 11 is formed by a resilient membrane sized and shaped to conform to the combined structure of keyboard 18 defined by the top plate 20 and key caps 34 and the upper portion 46 of the bottom plate and to provide an undercut periphery flange 56 which wraps around lower corner 54. The top cover is preferably molded of a tough but relatively soft (e.g., 30-50 durometer) silicone rubber, suitably Dow Corning SILASTIC 295. FIGS. 3-6H show suitable dimensions for various elements of an operative example of the top cover.

The bottom cover 16 is formed of a rigid or semi-rigid material, such as metal or molded plastic, in a shape which encloses the lower portion of 44 of bottom plate 22, with a blunt upper edge 58 extending around the front and rear sides of the keyboard in position to clamp the undercut periphery 56 of the top cover against overhang face 52. Long screws 60 are threaded through openings 62, 64 in the front and rear margins of the bottom cover into screw holes 66 conventionally provided in the front and rear margins of the bottom of keyboard 12. Screw holes 64 include tubular spacers 68 inside the rear of bottom cover 16.

FIG. 3 shows the underside of an example of the top cover 14 particularly adapted for a Tektronix-made, DEC VT100-compatible keyboard with COMPTEC key caps. It also provides a plan view of the periphery flange 56 that wraps around lower corner 54 of the keyboard 12. The top cover 14 has a top wall portion which includes a field region 70 of a first thickness (e.g., 0.052 inch) and a series of rectilinear regions 72A, 72B, 72C bounded as indicated in dashed lines 73. The latter regions are positioned to overlie the openings 32 in the top face of top plate 20: region 72A over the principal array of alphanumeric keys; region 72B over the numeric and cursor keypad keys; and regions 72C over the function keys.

Individual key covers 74 are formed in the top cover in each of regions 72A, 72B, 72C. The key covers 74 are integrally formed in the top cover and interconnected by areas 76, referred to as diaphragm regions, of a second, reduced thickness (e.g., 0.025 inch). The sidewalls of the individual key covers are likewise of a second, reduced thickness (0.025 inch) to permit, together with the diaphragm regions, flexure of the individual key covers when the keys are depressed. The individual key covers are sized to just fit over their respective key caps.

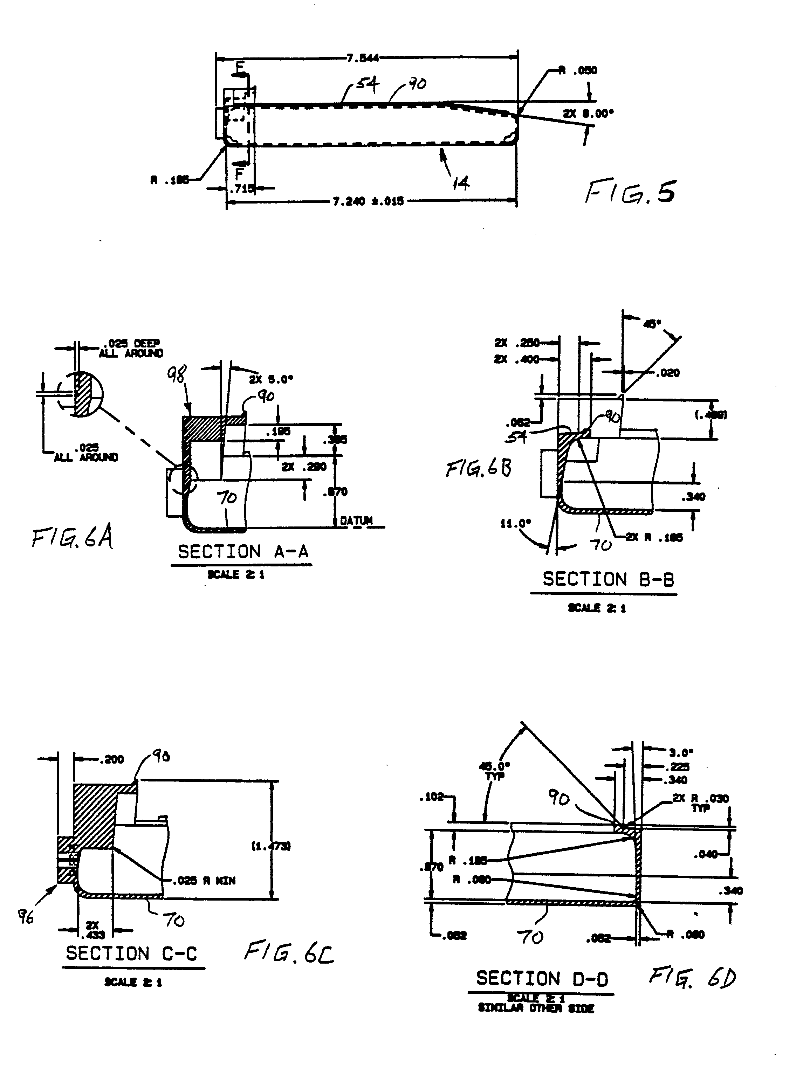

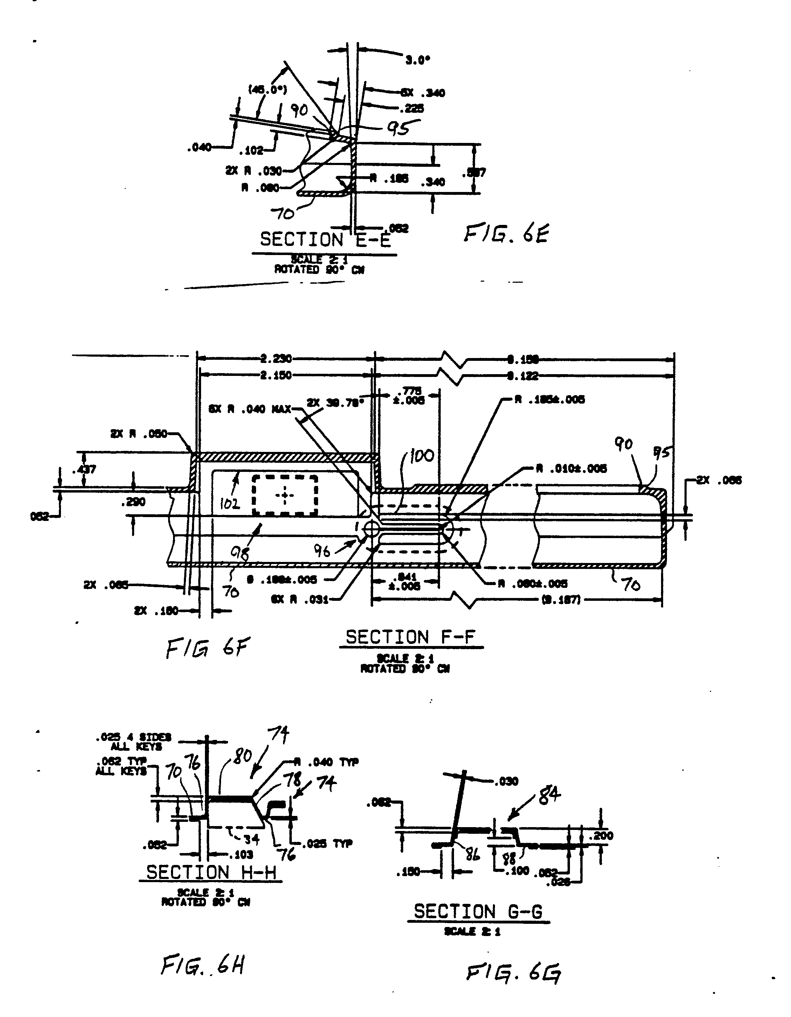

FIG. 6H shows a key cap 34 in dashed lines and the key cover for such key cap in solid, hatched lines. The side wall on the front face 38 of key 34 is indicated by reference numeral 78, the field region 70 is identified and the diaphragm region (e.g., about 0.1 inch wide) surrounding and between key covers 74 is indicated by reference numerals 76. The top surface of the cover is planar over all of the areas between and surrounding each key. The reduced thickness of the diaphragm areas is provided by relieving or indenting the underside of the cover along the boundaries 73. Each key cover includes a top finger pad 80, of somewhat greater thickness (e.g., 0.062 inch) than that of the field region 70, overlying top face 36 of the key cap. Each pad is preferably molded with a slight cylindrical shape formed about an axis along section line H-H and a radius matching that of key face 36.

Referring back to FIG.3, other feature formed in the top wall portion include a rectangular structure 82 and an octagonal structure 84. The rectangular structure 82 is merely an upward protuberance to conform to a like structure in the top plate 20 which is not a depressible key. Accordingly, no flexure of structure 82 is needed and its sidewalls and surrounding area of the cover can be of the first thickness. The octagonal structure 84, better seen in FIG. 6G, is shaped to conform to an octagonal, multiaxis directional control device built into the top panel of the top plate 20. This control device needs to be depressible at any position along its perimeter. Accordingly, structure 84 has sidewalls which have a lower (e.g., 0.10 inch) portion 86 of reduced thickness (e.g., 0.030 inch) and a surrounding diaphragm portion 88 (e.g., 0.15 inch wide) of reduced thickness (e.g., 0.20 inch) to permit flexure for actuation of the direction control device.

As shown in FIG. 3, and further in FIGS. 4, 5, 6B 6D and 6E, the wraparound flange 54 includes an edge of increased thickness which serves as a retainer 90. This retainer preferably extends around nearly the entire periphery of the top cover, with gaps 92, 94 in the back to ease removal of the cover from a mold. The retainer preferably has an inclined outer face 95 (FIGS. 6D and 6E), which also aids in removal from the mold.

As shown in FIGS. 3, 4 and 6F, the center back side of the top cover includes a key-shaped opening 96 for keyboard cable 18 and a cover 98 for a mouse port (not shown) in the keyboard. The mouse port cover is molded closed but is scored in a rectangular pattern over the mouse port so that a window can be cut out for connecting a mouse or similar device to the keyboard. Both of these structures are formed with thick surrounding material 100,102 for reinforcement of the openings and to help seal around them. Retainer 90 preferably extends along the sides and lower face of the mouse port cover.

After the top cover has been molded, nomenclature (i.e., the alphabetic, numeric, punctuation and other character symbols) is applied to the individual keys. This is done by silkscreening, using a silicone rubber based ink, the nomenclature onto the top pads of the keys and then curing the ink into the material of the top cover. The entire cover is silkscreened at once. This is done by fitting the top cover over a nest having openings under the individual key covers and applying a vacuum through these openings to substantially flatten the top cover against the nest for silkscreening.

In many keyboards, such as the VT100 keyboard, the "Caps Lock" key is illuminated to indicate when it is set. This indicator is transmitted through the keypad for such key by drilling a hole in the keypad and securing a translucent silicone rubber plug in the hole.

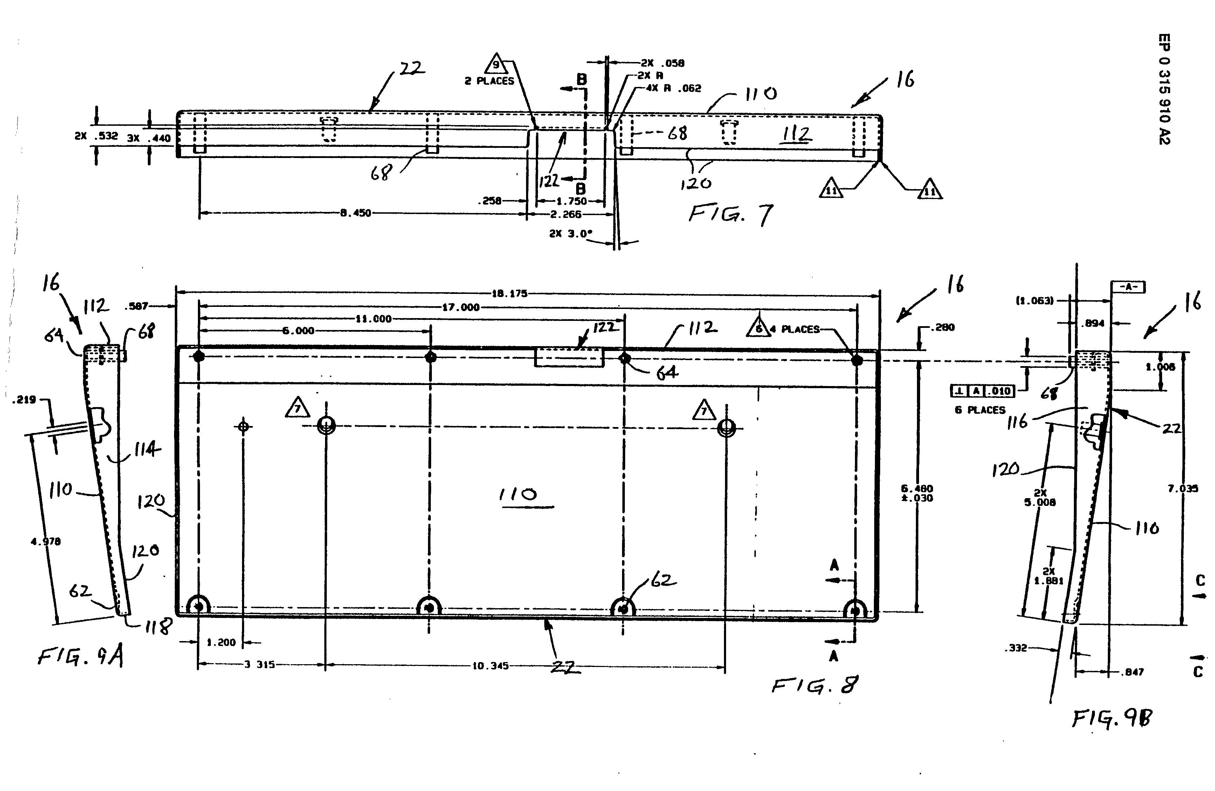

Referring next to FIGS. 7, 8, 9A and 9B, the bottom cover 22 has a bottom wall 110, a rear wall 112, left and right side walls 114, 116 and front wall 118. The front, rear and side walls are formed to provide a surrounding blunt edge 120 contoured to wall 52 of keyboard 11 for securing the periphery 56 of top cover 20 against wall 52. These walls are sized and spaced to fit just outside retainer 90 in position to compress against a portion of face 95. The back wall 112 has a nearly centered rectangular cut-out 122, best seen in FIG. 10B, for mouse port cover 98. FIGS. 10A and 10C shows how the screw holes along the front wall of the bottom cover are relieved so that the assembled keyboard 11 will lie with bottom wall 110 flush against a support surface.

Keyboard 11 is assembled by pulling cable 18 through keyhole opening 96 from inside to outside of the top cover 14. The top cover is oriented so that the fields of individual key covers are aligned with the corresponding key caps of keyboard 12. Then the top cover is stretched over the top of keyboard 12, fitting the individual key covers over the key caps, and its periphery is pulled down over the sides of the upper portion of the housing so that flange 56 extends along wall 52, as shown in FIG.1. Next, the bottom cover is fitted onto the under side of the combined keyboard housing and top cover assembly. The edge of the bottom cover is positioned along the outer side of retainer 90. Finally, screws 60 are threaded into screw holes 62, 64 and tightened to compress the edge of the bottom cover against flange 52 and retainer 90. If it is desired to use a mouse, the rectangular pattern in mouse port cover 98 is cut out to access the mouse connector.

In use, the sealed keyboard 11 is used in the same manner as keyboard 11, except that it can be used in a spill and debris prone environment without fouling. The thin, elastomer diaphragm and key cover side walls do not appreciably increase the pressure required to actuate the keys and permit a breakover feel to operation of the keys. The nomenclature, cured into the keypads, becomes an integral part of the top cover and thereby resists wear. The top cover does not have any crevices, and spills and debris are easily wiped or brushed from the top cover.

Having illustrated and described the principles of our invention with reference to a preferred embodiment and an operative example thereof, it should be apparent to those skilled in the art that the invention may vary in arrangement and detail without departing from such principles. We claim all variations and modifications within the scope and spirit of the following claims.

## Claims

1. A sealed computer terminal keyboard comprising a keyboard (11) having a base and a top plate (22,20) which are fitted together to form a housing, and keys mounted in a keyboard assembly within the keyboard housing including a plurality of closely spaced key caps (34) protruding upward through openings (32) in the top plate a predetermined distance above a top face of the top plate (20); **characterized** by a top cover (14) composed of a resilient, water-proof material shaped to conform to the top plate (20) and key caps (34) with elevated individual key covers (74) integrally formed in the top cover to cover the key caps separately so that the keys can be individually actuated; and
a bottom cover (16) shaped to enclose the base (22) of the keyboard and secure the top cover around a periphery thereof to the keyboard.

2. A sealed keyboard according to claim 1, **characterized** in that the top cover (14) is shaped to provide a substantially planar surface around the individual key covers (34).

3. A sealed keyboard according to claim 1 or 2, **characterized** in that the top cover (14) includes a first portion extending over a field area (70) of the top face of the top plate (20) and wrapped around sides of the keyboard housing which are formed in a first thickness and a second portion (76) immediately surrounding and extending between the key covers (74) formed in a reduced, second thickness to allow for flexure as the keys are depressed.

4. A sealed keyboard according to claim 3, **characterized** in that the top cover (14) includes a portion covering the sides of the key covers (74) formed in said reduced, second thickness to facilitate flexure as the keys are depressed.

5. A sealed keyboard according to claim 3, **characterized** in that the portions of the top cover (14) surrounding and between the key covers have a top surface which is coplanar with a top surface of the field area so that spilled liquid and debris are easily wiped or brushed away.

6. A sealed keyboard according to claim 3, **characterized** in that the top cover (14) has an undersurface which is relieved in portions immediately around and between the keys relative to portions of the undersurface beneath the field area to provide the reduced, second thickness.

7. A sealed keyboard according to one of the preceding claims, **characterized** in that the bottom cover (16) is formed of a rigid material, has edges shaped to mate snugly against periphery flanges (56) of the top cover (14) wrapped around sides of the keyboard housing, and is secured by attachment means (60) for compressing the flanges in sealing engagement against the keyboard housing.

8. A sealed keyboard according to claim 7, **characterized** in that the attachment means comprises screws (60) in screw holes (62) in the underside of the keyboard housing.

9. A sealed keyboard according to claim 1, **characterized** in that the top plate (20) has a generally planar top face and the base plate is designed to rest on a flat support surface and support the top face at an incline relative to the support surface; the top and base plates (20,22) have front, rear and side faces which form upper corners with the top face and lower corners along an underside of the keyboard housing; the top cover (14) has wraparound front, rear and side walls which extend around the upper and lower corners and the front, rear and side faces of the plates to enclose same, and the top cover has a periphery flange (56) which extends along the underside of the keyboard housing and has a peripheral edge (90) spaced inward of the lower corner; and

the bottom cover is formed of a rigid material, has edges shaped to mate snugly against periphery flange (56) of the top cover (14), and is secured by attachment means for compressing the flange in sealing engagement against the keyboard housing.

10. A sealed keyboard according to claim 1, **characterized** in that the keyboard housing includes an attached cable (18) in the back and the top cover (14) includes keyhole opening means for the cable to pass through the cover.

11. A sealed keyboard according to claim 1, **characterized** in that the keyboard housing includes a connector for a mouse or other control device and the cover includes enclosure means (98) positioned for covering and sealing the connector, the enclosure means including means for forming an opening to access the connector.

12. A method for sealing a computer terminal keyboard for use in a spill- and debris-prone environment, the keyboard having a base and a top plate (20,22) which are fitted together to form an elongate housing of generally rectilinear shape and an array of keys mounted in a keyboard assembly within the keyboard housing including a plurality of closely spaced key caps (34) protruding upward through openings (32) in the top plate a predetermined distance above a top face of the top plate, **characterized** by molding a top cover (14) of a resilient, waterproof material shaped to conform to the top plate and key caps with elevated individual key covers (74) integrally formed in the top cover to cover the key caps separately so that the keys can be individually actuated;

forming a wraparound margin (52) in the top cover including a periphery flange (56) sized to extend a predetermined distance beneath the keyboard housing to cover a margin of the underside thereof; fitting the top cover (14) over the keyboard housing with the key caps (34) nested within the individual key covers (74) and the wraparound margin enclosing sides of the keyboard housing with the periphery flange extending beneath the keyboard housing; and

securing the top cover to the underside of the keyboard housing along the periphery flange.

13. A method according to claim 12, **characterized** in that the securing step includes forming a bottom cover (16) for enclosing the underside of the keyboard housing, with an edge (120) shaped to substantially conform to the shape of said margin of the underside of the keyboard housing, and clamping the periphery flange of the top cover between the edge of the bottom cover and the underside of the keyboard housing.

14. A method according to claim 12 **characterized** in that the molding step includes forming the cover (14) in a first thickness in areas (70,72A,B,C) of the keyboard spaced from the keys and forming the cover in areas (76) immediately surrounding and between the keys in a second thickness less than the first thickness to permit sufficient flexure for actuating the keys through a full-travel key-stroke.

15. A sealed keyboard according to the first part of claim 1, **characterized** in that the top cover comprises

an elastomeric membrane molded to conform to the top plate and key caps with elevated individual key covers (74) integrally formed in a top wall of the cover to enclose the key caps (34) separately so that the keys can be individually actuated;

the top wall of the cover (14) being shaped to provide a substantially planar exposed, upper surface around and between the individual key covers (74) so that spilled liquid and debris can be easily wiped or brushed away;

the top wall being formed in a first thickness in areas (70,72A,B,C) spaced from the key covers (74) and being formed in a reduced, second thickness in areas (76) immediately surrounding and extending between the key covers to allow for flexure as the keys are depressed.

16. A sealed keyboard according to claim 15 molded of silicone rubber having a hardness in a range of 30 to 50 durometer, in which the first thickness is about 0.05 inch and the second thickness is in a range of 0.02 to 0.03 inch.

17. A sealed keyboard according to claim 15 or 16, **characterized** in that the individual key covers (74) are formed in said reduced, second thickness to facilitate flexure as the keys are depressed.

18. A sealed keyboard according to one of claims 15 to 17, **characterized** in that the top wall has an undersurface which is relieved in areas (76) immediately around and between the key covers (74) relative to areas (70,72A,B,C) of the undersurface spaced apart from the key covers, to provide the reduced, second thickness.

**SECTION B-B**
SCALE 2:1

FIG. 10B

**SECTION A-A**
TYPICAL 4 PLACES
SCALE 2:1

FIG 10A

**VIEW C-C**
TYPICAL 4 PLACES
SCALE 2:1

FIG. 10C

FIG. 1

EP 0 315 910 A2

FIG. 3

FIG. 4

FIG.5

FIG.6A

SECTION A-A

SCALE 2:1

FIG.6B

SECTION B-B

SCALE 2:1

SECTION C-C

FIG.6C

SCALE 2:1

SECTION D-D

FIG. 6D

SCALE 2:1
SIMILAR OTHER SIDE

SECTION E-E

SCALE 2:1
ROTATED 90° CW

FIG. 6E

FIG 6F

SECTION F-F

SCALE 2:1
ROTATED 90° CW

SECTION H-H

SCALE 2:1
ROTATED 90° CW

SECTION G-G

SCALE 2:1

FIG. 6H

FIG. 6G

EP 0 315 910 A2

*FIG. 7*

*FIG. 9A*

*FIG. 8*

*FIG. 9B*